# EUROPEAN PATENT APPLICATION

(11) **EP 3 147 844 A1**
(43) Date of publication of application: **29.03.2017**
(21) Application number: 16185596.0
(22) Date of filing: 25.08.2016
(51) Int. Cl.: G06Q 20/04, G06Q 20/20, G06Q 20/40

(54) **CHECKOUT SYSTEM AND METHOD**

(30) Priority: 25.09.2015 JP 2015187954
(71) Applicant: Toshiba TEC Kabushiki Kaisha, Tokyo 141-0032 (JP)
(72) Inventor: YABU, Syuji, Shinagawa-ku, Tokyo 141-8562 (JP)
(74) Representative: Takeuchi, Maya

(57) **Abstract**

A payment apparatus is provided for use in a check-out system comprising a registration apparatus, a plurality of the payment apparatuses, and a server. An input device receives input of a user identification corresponding to a customer who performs a transaction. The payment apparatus receives, from the registration apparatus, payment information indicating a total amount to be paid for the transaction. The payment apparatus also receives, from one of the registration apparatus and the server, payment method information indicating a payment method corresponding to the customer who performs the transaction, based on the user identification. The payment apparatus processes payment with respect to the received payment information in accordance with the payment method indicated in the payment method information.

## Description

### FIELD

Embodiments described herein relate generally to a checkout system, a payment apparatus and a method for performing a check-out process.

### BACKGROUND

Conventionally, a semi-self-service type checkout system is arranged in a store such as a supermarket. The semi-self-service type checkout system is provided with a registration apparatus in which merchandise is registered and which generates transaction information for payment processing and a payment apparatus which performs the payment processing based on the transaction information regarding the merchandise registered in the registration apparatus. A cashier (salesperson) operates the registration apparatus and a shopper operates the payment apparatus.

In the checkout system, the transaction information generated in the registration apparatus is transferred to an available payment apparatus. The payment apparatus that receives the transaction information is operated by a shopper and executes payment processing for a price based on the transaction information.

Normally, the payment apparatus is able to direct the shopper to select any payment method among a plurality of payment methods. The plurality of payment methods includes, for example, cash, a credit card, electronic money, a prepaid card, or the like. The payment apparatus displays a payment method selection screen for selecting any payment method among the plurality of payment methods and allows the shopper to select any payment method through the payment method selection screen. The payment apparatus displays an operation screen according to the payment method selected by the shopper and executes payment when the shopper operates the payment apparatus according to the selected payment method.

As such, although a plurality of payment methods are available in the payment apparatus, the shopper frequently uses the same payment method each time. Accordingly, even when the payment method is the same each time when the shopper pays for merchandise using the payment apparatus, the shopper needs to perform an operation of selecting the same payment method through the payment method selection screen.

To improve such situations, there is provided a check-out system including at least one registration apparatus and a plurality of payment apparatuses, wherein a check-out process is performed using a registration apparatus and any one of the payment apparatuses,
the registration apparatus including:
   a first communication unit;
   a first input device configured to receive input of merchandise information for merchandise items to be purchased in a transaction; and
   a first controller configured to:
      generate payment information indicating a total amount to be paid for the transaction based on the input merchandise information;
      control the first communication unit to receive payment method information indicating a payment method corresponding to a customer who performs the transaction; and
      control the first communication unit to transmit the payment
   information and the payment method information identification; and each of the plurality of payment apparatuses including
   a second communication unit; and
   a second controller configured to:
      control the second communication unit to receive the payment information and the payment method information; and
      process payment with respect to the received payment information in accordance with the payment method indicated in the payment method information.

Preferably, the first input device is further configured to:
receive input of a user identification corresponding to the customer that performs the transaction; and
transmit a request for the payment method information, the request including the user identification.

Preferably still, the system further comprises:
a server configured to receive the request, and in response to the request, transmit the payment method information to the first communication unit.

Suitably, the system further comprises:
a server configured to store customer information, including the payment method information, in association with a user identification.

Suitably still, each of the plurality of payment apparatus includes a second input device configured to receive input of the user identification corresponding to the customer that performs the transaction;
the second controller is configured to control the second communication unit to transmit a request for the customer information, the request including the user identification; and
the server is configured to receive the request, and in response to the request, transmit the customer information to the second communication unit.

In the above system, the second input device is preferably configured to receive input of a change to the payment method information; and
the second controller is preferably configured to control the second communication unit to transmit the changed payment method information with the user identification to the server.

Also in the above system, the server is preferably configured to update the payment method information included in the customer information corresponding to the user identification transmitted with the changed payment method information, in accordance with the changed payment method information.

In a check-out system including at least one registration apparatus and a plurality of payment apparatuses, the invention also relates to a method of performing a check-out process using a registration apparatuses and any one of the payment apparatuses, the method comprising the steps of:
receiving, in the registration apparatus, input of merchandise information for merchandise items to be purchased in a transaction;
generating, in the registration apparatus, payment information indicating a total amount to be paid for the transaction based on the input merchandise information;
receiving, in the registration apparatus, payment method information indicating a payment method corresponding to a customer who performs the transaction;
transmitting, from the registration apparatus to a payment apparatus, the payment information and the payment method information;
receiving, in the payment apparatus, the payment information and the payment method information that was transmitted from the registration apparatus; and
processing, in the payment apparatus, payment with respect to the received payment information in accordance with the payment method indicated in the payment method information.

Preferably, the method further comprises the steps of:
receiving, in the registration apparatus, input of a user identification corresponding to the customer who performs the transaction; and
transmitting a request for the payment method information, the request including the user identification.

Preferably still, the method further comprises the step of:
receiving the request in a server, and in response to the request, transmitting the payment method information from the server to the registration apparatus.

Preferably yet, the method further comprises the step of:
storing in a server, customer information, including the payment method information, in association with a user identification.

Conveniently, the method further comprises the steps of:
receiving, in the payment apparatus, input of the user identification;
receiving, in the payment apparatus, input of a change to the payment method information; and
transmitting the changed payment method information with the user identification to the server.

The above method may further comprise the step of:
updating the stored payment method information included in the customer information corresponding to the user identification transmitted with the changed payment method information, in accordance with the changed payment method information.

In the above method, the payment method information preferably is received as customer information including the payment method information and customer benefit information.

The invention further relates to a payment apparatus for use in a check-out system comprising a registration apparatus, a plurality of the payment apparatuses, and a server, the payment apparatus comprising:
an input device configured to receive input of a user identification corresponding to a customer who performs a transaction;
a communication unit; and
a controller configured to control the communication unit to:
   receive, from the registration apparatus, payment information indicating a total amount to be paid for the transaction;
   receive, from one of the registration apparatus and the server, payment method information indicating a payment method corresponding to the customer who performs the transaction, based on the user identification; and
   process payment with respect to the received payment information in accordance with the payment method indicated in the payment method information.

Preferably, the controller further controls the communication unit to transmit a request for the payment method information, the request including the user identification.

Preferably still, the input device is configured to receive input of a change to the payment method information.

Preferably yet, the controller is configured to process payment with respect to the received payment information in accordance with the payment method indicated in the changed payment method information.

Typically, the controller is configured to control the communication unit to transmit the changed payment method information with the user identification to the server.

In the above payment apparatus, the payment method information is preferably received as customer information including the payment method information and customer benefit information.

### DESCRIPTION OF THE DRAWINGS

The above and other objects, features and advantages of the present invention will be made apparent from the following description of the preferred embodiments, give as non-limiting examples, with reference to the accompanying drawings, in which:
FIG. 1 is a plan view illustrating an arrangement of a registration apparatus and a payment apparatus in a checkout system according to an embodiment.
FIG. 2 is a block diagram of the registration apparatus and the payment apparatus.
FIGS. 3 and 4 are flowcharts of an example sequence of operations of a control process of the registration apparatus.
FIGS. 5 and 6 are flowcharts of an example sequence of operation of a control process of the payment apparatus.
FIG. 7 illustrates an example of a user card input screen.
FIG. 8 illustrates an example of a payment method selection screen.
FIG. 9 illustrates an example of a payment screen.

### DETAILED DESCRIPTION

Described herein is a checkout system capable of reducing a workload of a payment operation, and payment apparatus of the checkout system, and a control program.

A payment apparatus is provided for use in a check-out system comprising a registration apparatus, a plurality of the payment apparatuses, and a server. An input device receives input of a user identification corresponding to a customer who performs a transaction. The payment apparatus receives, from the registration apparatus, payment information indicating a total amount to be paid for the transaction. The payment apparatus also receives, from one of the registration apparatus and the server, payment method information indicating a payment method corresponding to the customer who performs the transaction, based on the user identification. The payment apparatus processes payment with respect to the received payment information in accordance with the payment method indicated in the payment method information.

In one embodiment, a check-out system has at least one registration apparatus; and a plurality of payment apparatuses, wherein the at least one registration apparatus includes: a first communication unit, a first input device configured to receive input of merchandise information for merchandise items to be purchased in a transaction, and a first controller configured to: generate payment information indicating a total amount to be paid for the transaction based on the input merchandise information, control the first communication unit to receive payment method information indicating a payment method corresponding to a customer who performs the transaction, and control the first communication unit to transmit the payment information and the payment method information identification, and each of the plurality of payment apparatuses includes a second communication unit, and a second controller configured to: control the second communication unit to receive the payment information and the payment method information, and process payment with respect to the received payment information in accordance with the payment method indicated in the payment method information.

Hereinafter, an embodiment will be described with reference to the accompanying drawings. A checkout system of the embodiment is arranged, for example, at a store a supermarket or the like.

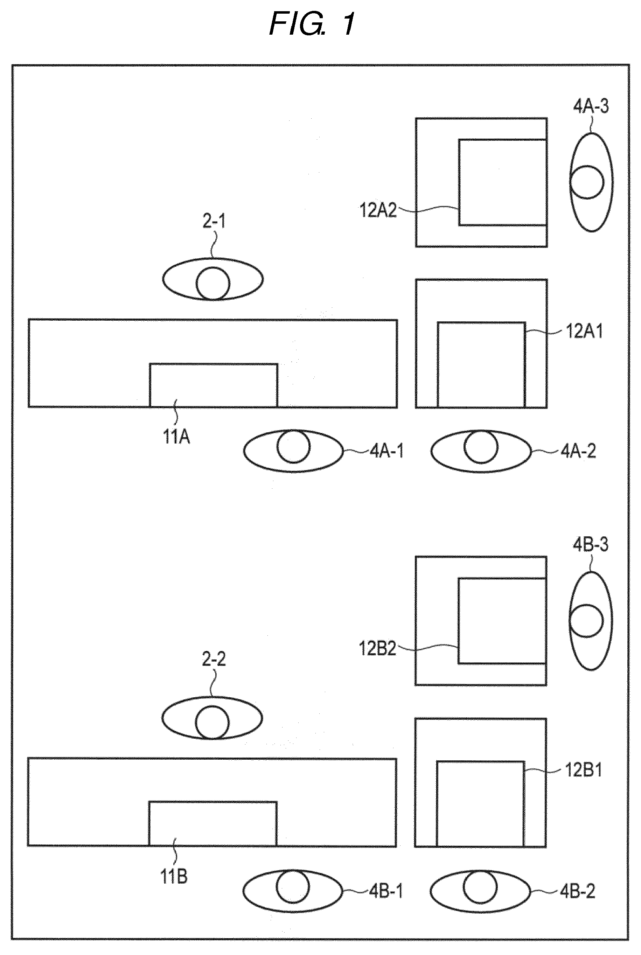

FIG. 1 is a plan view illustrating an arrangement of a registration apparatus 11 (11A and 11B) and a plurality of payment apparatuses 12 (12A1, 12A2, 12B1, and 12B2) in the checkout system according to the embodiment. The registration apparatus 11 and the payment apparatus 12 are arranged at a checkout area of a store such as a supermarket. The checkout system illustrated in FIG. 1 includes two registration apparatuses 11A and 11B. Two payment apparatuses 12A1 and 12A2 are arranged in the vicinity of the registration apparatus 11A. Two payment apparatuses 12B1 and 12B2 are arranged in the vicinity of the registration apparatus 11B.

The registration apparatus 11A receives a merchandise code from merchandise intended to be purchased by a shopper 4 (4A-1) as an input and generates transaction information for payment processing in the payment apparatus 12 based on the merchandise code. The registration apparatus 11A generates transaction information on a per transaction basis. The transaction information includes information regarding at least one merchandise and a total transaction amount of money to be settled. The registration apparatus 11A is operated by an employee 2-1 called a checker who performs a merchandise registration operation. The registration apparatus 11A can perform the same payment processing as that of the payment apparatus 12 by operation of the checker based the transaction information.

The payment apparatuses 12A1 and 12A2 receive the transaction information generated by the registration apparatus 11A and perform the payment processing based on the transaction information. The payment apparatus 12A1 and 12A2 are operated by the shopper 4 (4A-2 and 4A-3). The payment apparatuses 12A1 and 12A2 may be operated by the employee 2-1.

In FIG. 1, the registration apparatus 11A is mounted on a work table. The work table includes a rectangular top surface, for example. The employee 2-1 performs a scan operation (merchandise registration operation) on the merchandise which the shopper 4A-1 intends to purchase.

The payment apparatuses 12A1 and 12A2 are arranged in the vicinity of a work table on which, for example, the registration apparatus 11A is mounted. FIG. 1 illustrates an example in which two payment apparatuses 12A1 and 12A2 are arranged. Three or more payment apparatuses 12 may also be provided.

The registration apparatus 11B registers merchandise which the shopper 4 (4B-1) intends to purchase and generates transaction information. The registration apparatus 11B is operated by an employee 2-2 called a checker who performs the merchandise registration operation. The registration apparatus 11B can perform the same payment processing as that of the payment apparatus 12 by operation of the checker based on the transaction information.

The payment apparatuses 12B1 and 12B2 receive the transaction information generated by the registration apparatus 11B and perform the payment processing based on the piece of transaction information. The payment apparatuses 12B and 12B2 are operated by the shopper 4 (4B-2 and 4B-3). The payment apparatuses 12B1 and 12B2 may be operated by the employee 2-2.

The registration apparatus 11B is configured similar to the registration apparatus 11A, and detailed description thereof will be omitted. The payment apparatuses 12B1 and 12B2 are configured similar to the payment apparatuses 12A1 and 12A2, and detailed descriptions thereof will be omitted.

The checkout system according to the embodiment is not limited to the number of registration apparatuses 11. The payment processing based on the transaction information generated by the registration apparatus 11 is generally executed by the payment apparatus 12 arranged in the vicinity of the registration apparatus 11 that generates the transaction information, but the payment processing may be executed in the payment apparatus 12 arranged at a place distant from the registration apparatus 11. For example, the payment processing for the transaction information generated by the registration apparatus 11A may be executed by one payment apparatus 12B1 or another payment apparatus 12B2.

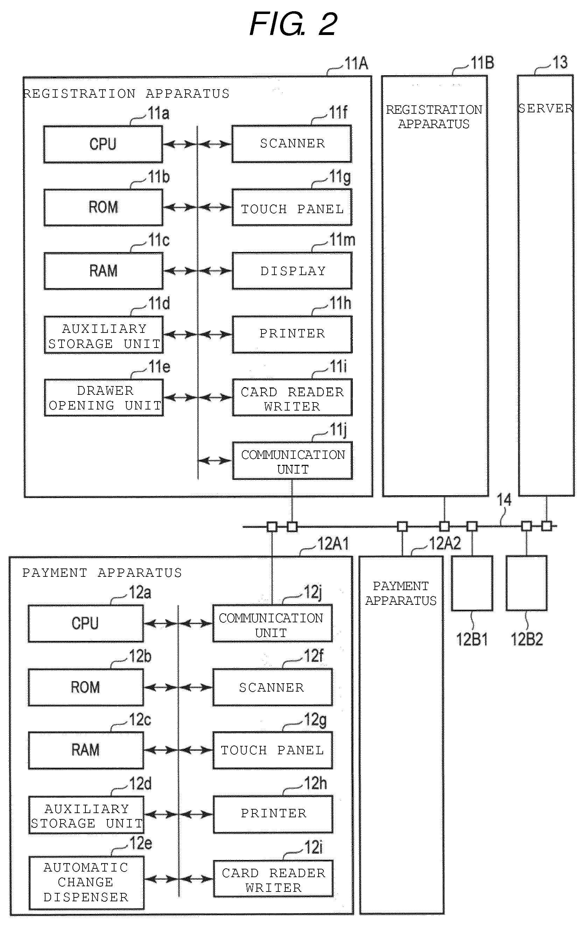

FIG. 2 is a block diagram of the registration apparatus 11 and the payment apparatus 12.

All of the registration apparatuses 11A and 11B and the payment apparatuses 12A1, 12A2, 12B1 and 12B2 are connected to a network such as a local area network (LAN) 14. Another communication network such as the internet or a wireless LAN may be utilized instead of the LAN 14. Likewise, any configuration in which information is communicated between the registration apparatuses 11A and 11B and the payment apparatuses 12A1, 12A2, 12B1, and 12B2 through a server 13 (a store computer) may be adopted.

The registration apparatus 11A may be provided as a computer, and includes, a central processing unit (CPU) 11a, a read-only memory (ROM) 11b, a random-access memory (RAM) 11c, an auxiliary storage unit 11d, a drawer opening unit 11e, a scanner 11f, a touch panel 11g, a printer 11h, a card reader writer 11i, a communication unit 11j, and a display 11m.

The CPU 11a controls respective units so as to implement various operations as the registration apparatus 11 based on an operating system, middleware, and an application program stored in the ROM 11b and RAM 11c. Thus, the CPU 11a functions as a controller for the units of the registration apparatus 11.

In the ROM 11b and RAM 11c, data referenced in various processing performed by the CPU 11a is stored, in addition to various programs executed by the CPU 11a. In the RAM 11c, a registration merchandise table, in which the piece of information of various merchandise is registered, is recorded as data to be temporarily stored, for example, when the merchandise registration processing is executed.

A program executed by the CPU 11a includes a control program which executes processing for receiving customer information for a shopper who is registered as a member from the server 13, processing for inputting merchandise information (merchandise code or the like) through the scanner 11f, processing for generating transaction information used for payment processing in accordance with the merchandise information registered in the registration merchandise table, payment processing based on the transaction information, and transmitting the transaction information (which may include the customer information)to the server 13 or the payment apparatus 12. The customer information includes payment method information indicating a payment method to be used for the payment processing corresponding to the shopper 4 (customer). The payment method includes, for example, cash, a credit card, electronic money, a prepaid card, or the like.

The auxiliary storage unit 11d stores data used in various processing performed by the CPU 11a or data generated by the processing performed by the CPU 11a. For example, an electric erasable programmable read-only memory (EEPROM) (registered trademark), a hard disk drive (HDD), a solid state drive (SSD) or the like may be used as the auxiliary storage unit 11d.

The drawer opening unit 11e automatically opens a drawer for accommodating money.

The scanner 11f may read merchandise information, including a merchandise code unique to the merchandise, by optical scanning. The scanner 11f may be a fixed or hand-held type two dimensional code scanner and may also be a type of scanner identifying merchandise using an image recognition technique. A single or a plurality of scanners 11f may be provided.

The touch panel 11g includes a display device and a touch sensor. The display device displays an arbitrary screen such as a graphical user interface screen (GUI) screen. For example, the display device displays information included in the transaction information (merchandise name, amount of money, or the like) related to the merchandise registered as a purchase target, a subtotal amount of money, various menus, and a button for inputting a command, or the like. For example, a device such as a color liquid crystal display (LCD) may be utilized as the display device. The touch sensor is arranged overlapping a display surface. The touch sensor detects a touch position on the display surface of the display device by an operator and sends the positional information to the CPU 11a.

The printer 11h is, for example, a thermal printer or a dot impact printer, and prints various character strings, images, code patterns (bar code, two dimensional code, or the like) with respect to a receipt sheet to issue a receipt in which transaction contents such as a merchandise name, a unit price, a total amount of money is printed.

The card reader writer 11i reads data recorded in a card and writes data onto the card. The card may be one of various cards which include information relating to payment such as a card, a point card, in addition to card for payment such as a credit card, a debit card, electronic money card, and a prepaid card. The card reader writer 11i may be any of a magnetic device, a contact device, or a contactless device, or may incorporate a plurality of types of devices.

The communication unit 11j communicates with the server 13 and the payment apparatus 12 through the LAN 14.

The display 11m may be, for example, a color LCD. The display 11m displays, for example, a screen with merchandise information of merchandise that is registered with respect to the shopper 4A-1.

For example, a POS terminal may be used as hardware of the registration apparatus 11A. A configuration of the registration apparatus 11B is similar to that of the registration apparatus 11A and description thereof will be omitted.

The payment apparatus 12A1 may be provided as a computer, and includes a CPU 12a, a ROM 12b, a RAM 12c, an auxiliary storage unit 12d, an automatic change dispenser 12e, a scanner 12f, a touch panel 12g, a printer 12h, a card reader writer 12i, and a communication unit 12j.

The CPU 12a controls respective units so as to implement various operations as the payment apparatus 12A1 based on an operation system, middleware, and an application program stored in the ROM 12b and RAM 12c. Thus, the CPU 12a functions as a controller for the units of the payment apparatus 12A1.

In the ROM 12b and RAM 12c, data referenced in various processing performed by the CPU 12a is recorded, in addition to various programs executed by the CPU 12a. In the RAM 12c, data indicating the transaction information in the registration merchandise table and transmitted from the registration apparatus 11 are recorded as data to be temporarily stored.

A program executed by the CPU 12a includes a control program which executes processing for receiving transaction information used for payment processing, processing for setting a payment method based on the customer information included in the transaction information, processing for displaying the operation screen in accordance with the payment method, payment processing based on the transaction information in accordance with an input corresponding to the operation screen.

The auxiliary storage unit 12d stores data used in various processing performed by the CPU 12a or data generated in the processing performed by the CPU 12a. For example, an EEPROM, an HDD, an SSD or the like may be used as the auxiliary storage unit 12d.

The automatic change dispenser 12e receives an inserted coin and paper money. The automatic change dispenser 12e discharges a coin and a paper money as change.

The scanner 12f reads data recorded in the medium such as a receipt by optical scanning. The scanner 12f may be a fixed type or a hand-held type two dimensional code scanner and may also be a type of scanner identifying merchandise an image recognition technique. A single type of scanner 12f or a plurality of types of scanners 12f may be provided.

The touch panel 12g includes a display device and a touch sensor. The display device displays an arbitrary screen such as a GUI screen. For example, the display device displays information included in the transaction information (merchandise name, amount of money, or the like) related to the merchandise registered as a purchase target, a subtotal amount of money, various menus, and a button for inputting a command, or the like. For example, a device such as a color LCD may be utilized as the display device. The touch sensor is arranged overlapping with a display surface. The touch sensor detects a touch position on the display surface of the display device by an operator and sends the positional information to the CPU 12a.

The printer 12h is, for example, a thermal printer or a dot impact printer, and prints various character strings, images, or the like onto a receipt sheet to issue a transaction receipt or the like.

The card reader writer 12i reads data recorded in a card and writes data onto the card. The card includes various cards in which a piece of information relating to payment such as a card, a point card, in addition to the card for payment such as a credit card, a debit card, electronic money card, and a prepaid card. The card reader writer 12i may be any of a magnetic device, a contact device, or a contactless device, or may incorporate a plurality of types of devices.

The communication unit 12j communicates with the server 13 and the registration apparatus 11 through the LAN 14.

The payment apparatus 12A1 includes a detection sensor, which is capable of detecting that a shopper 4A-2 approaches the payment apparatus 12A1, or the like.

For example, a self POS terminal may be utilized as hardware of the payment apparatus 12A1. The configuration of the payment apparatuses 12A2, 12B1, and 12B2 is similar to that of the payment apparatus 12A1 and detailed description thereof will be omitted.

The server 13 may be provided as a computer in which a CPU (processor) executes various processing based on a program recorded in a memory. The server 13 has a function of managing customer information related to the shopper 4 (customer) who is registered as a member. The server 13 stores the customer information which includes the payment method information that indicates the payment method instructed by the shopper 4 when the payment apparatus 12 is used. The customer information may also include personal information such as a name, address, and telephone number related to a member, as well as information such as earned points. The customer information of each shopper 4 is stored in association with an ID determined on a per shopper 4 (user) basis. The ID may be recorded in, for example, a card provided to the shopper 4 (user). When an inquiry request for customer information corresponding to the ID is received from the registration apparatus 11 or the payment apparatus 12, the server 13 transmits the customer information (including the payment method information) corresponding to the ID to the registration apparatus 11 or the payment apparatus 12.

Next, description will be made of operations of the checkout system according to the embodiment. The contents of a process which will be described in the following are illustrative only, and various processes capable of obtaining the same result may be appropriately utilized. In the following description, operations of the registration apparatus 11A and the payment apparatus 12A1 will be described by way of an example.

When the registration apparatus 11A is started in a mode at which a purchased merchandise registration processing is performed, the CPU 11a starts a control process based on a control program stored in the ROM 11b or the auxiliary storage unit 11d.

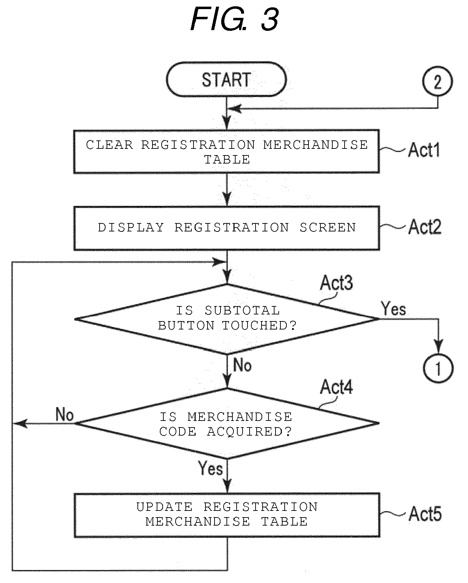

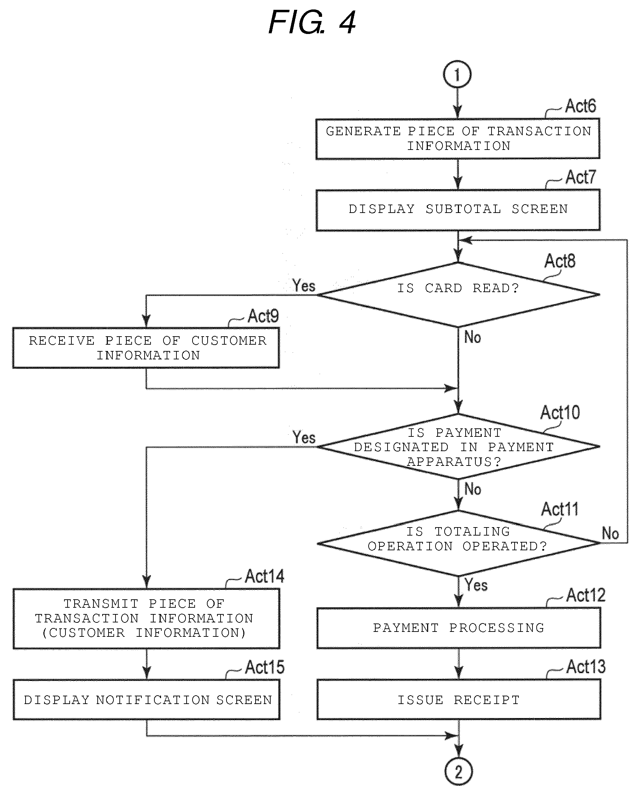

FIG. 3 and FIG. 4 are flowcharts of an example sequence of operations of a control process of the registration apparatus 11A (CPU 11a) in the embodiment.

When the control process is started, the CPU 11a clears registered contents of the registration merchandise table recorded in the RAM 11c (Act 1). The CPU 11a causes the touch panel 11g to display a registration screen and a registration operation screen (Act 2). The registration screen displays the merchandise information registered in the registration merchandise table. The registration screen allows the employee 2-1 to confirm the status of the registration processing. The registration operation screen displays various functional buttons such as a subtotal button and a merchandise button used for designating merchandise by the employee 2-1.

The CPU 11a waits for operation of a subtotal button displayed in the screen of the touch panel 11g or acquisition of a merchandise code through the scanner 11f in a state where the registration screen and the registration operation screen are displayed.

When it is detected that the merchandise code attached to the merchandise is read from the scanner 11f through the operation by the employee 2-1 (Act 4, Yes), the CPU 11a registers (updates) the merchandise information corresponding to the merchandise code in the registration merchandise table (Act 5). The CPU 11a also updates the registration screen SC1 according to the contents of the registration merchandise table after the update.

Thereafter, as described above, each time when the employee 2-1 performs the operation to read the merchandise code using the scanner 11f, the CPU 11a subsequently adds the corresponding merchandise information to the registration merchandise table in accordance with the acquired merchandise code (Act 4 and Act 5).

After at least one merchandise is registered, when it is detected that the subtotal button is touched (Act 3, Yes), the CPU 11a generates the transaction information for payment processing related to all merchandise registered in the registration merchandise table based on the contents registered in the registration merchandise table (Act 6). The transaction information includes the list of the registered merchandise, the total number and the total amount of money of purchased merchandise. The CPU 11a causes the touch panel 11g to display a subtotal screen which includes the items such as the list of the registered merchandise, the total number and the total amount of money of the registered merchandise (Act 7). The subtotal screen is provided with a payment button to perform the payment processing by performing totaling processing in the registration apparatus 11A and a payment apparatus designation button for designating the payment processing to be performed in the payment apparatus 12.

Furthermore, in a state where the subtotal screen is displayed, the registration apparatus 11A is able to read the card possessed by the shopper 4. The shopper 4 inputs the member ID and thus may be granted, for example, benefits determined for a member, for example, the discount of a payment price (5% discount or the like), earned points, or the like. When the card reader writer 11i is operated to read the card by the employee 2-1 (Act 8, Yes), the CPU 11a inputs data such as the member ID recorded in the card through the card reader writer 11i.

The CPU 11a transmits a request for the customer information of the server 13 based on the member ID read from the card. The server 13 transmits the customer information corresponding to the member ID to the registration apparatus 11A in response to the request from the registration apparatus 11A. The CPU 11a receives the customer information, which corresponds to the ID read from the card, from the server 13 through the communication unit 11j (Act 9).

When it is detected that the payment button which performs the totaling operation is touched in the subtotal screen (Act 11), the CPU 11a executes payment processing regarding the transaction information by a payment method requested by a shopper (Act 12), and issues the transaction receipt on which the transaction contents are printed by the printer 11h (Act 13).

When it is detected that the transfer button which designates the payment processing to be performed in the payment apparatus 12 is touched in the subtotal screen (Act 10, Yes), the CPU 11a transmits the transaction information to, for example, the payment apparatus 12A1 at which the payment processing is performed (Act 14). In this case, when the customer information of the shopper 4 is received from the server 13 due to reading of the card, the CPU 11a transmits the corresponding transaction information and the customer information to the payment apparatus 12A1. The transaction information includes the payment method information indicating the payment method used in the payment processing by the shopper 4 (customer).

Next, description will be made of operations of the payment apparatus 12A1 in the embodiment.

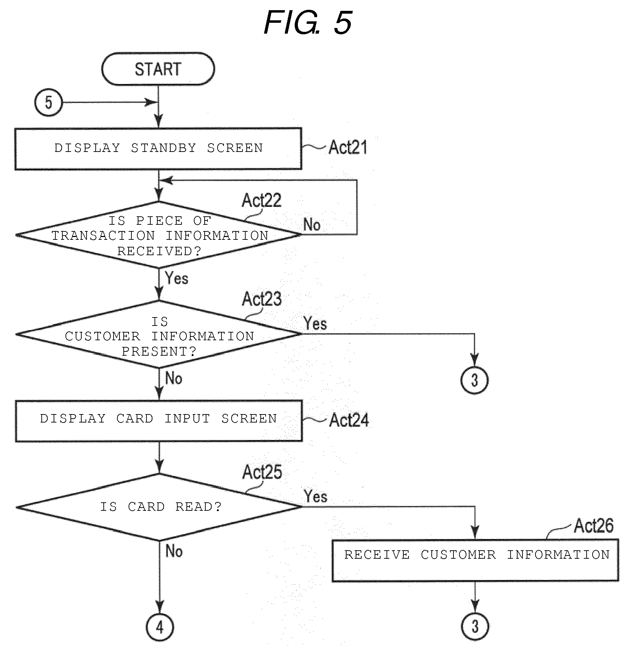

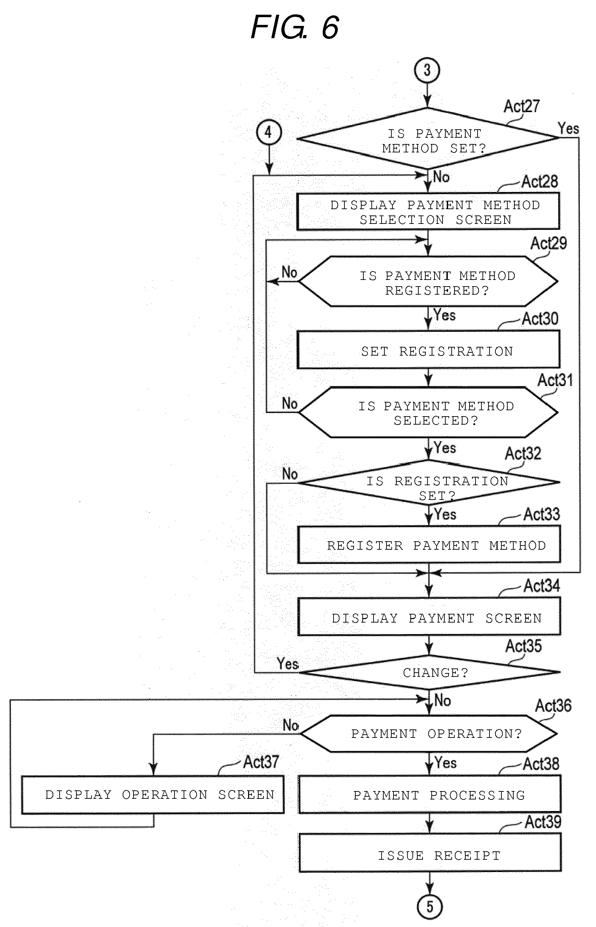

FIG. 5 and FIG. 6 are flowcharts of an example sequence of operations of the control process of the payment apparatus 12A1 (CPU 12a) in the embodiment.

In an initial state, the payment apparatus 12A1 (CPU 12a) causes the touch panel 12g to display a standby screen. The standby screen indicates a state where there is no payment processing, and the information to be displayed may be determined arbitrarily. For example, a message indicating that the payment processing is not able to be performed or any image displaying an advertisement or the like as a screen saver is displayed in the standby screen.

The CPU 12a monitors receiving of transaction information from the registration apparatus 11A in the standby state. Here, when it is detected that the transaction information is received (Act 22, Yes), the CPU 12a records the transaction information in the RAM 12c or the auxiliary storage unit 12d and determines whether the customer information and the transaction information are received.

When the customer information is not received (Act 23, No), the CPU 12a causes the touch panel 12g to display the operation screen used for confirming the use of the card (Act 24). That is, when the customer information is not received, the card has not been read by the registration apparatus 11A. The payment apparatus 12A becomes able to read the card by the operation of the shopper 4.

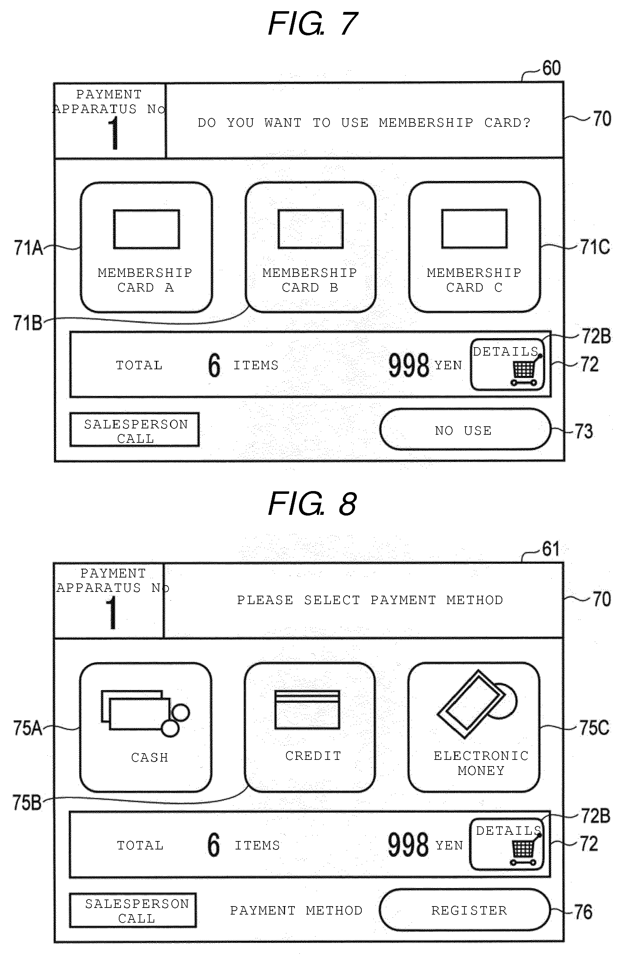

FIG. 7 is a diagram illustrating an example of a card input screen 60 for confirming a use of the card in the embodiment.

In the card input screen 60, a message 70 ("Do you want to use a membership card?") for inquiring about an operation with respect to the operation screen, and buttons 71A, 71B, and 71C for selecting any one of the plurality of types of the cards A, B, and C are displayed. In the card input screen 60, a total amount display region 72 for displaying the number of merchandise, which are regarded as the payment processing and registered in the registration apparatus 10, and a total amount of money (payment amount of money) and a button 73 indicating that the card is not used are provided. In the total amount display region 72, a details button 72B for displaying the registered merchandise in the registration apparatus 10 in a list (details) is provided. The total amount display region 72 and the list (details) are displayed based on the transaction information received from the registration apparatus 11A.

Here, when the shopper 4 performs operation of selecting any of the buttons 71A, 71B, and 71C, the CPU 12a proceeds to a read state of a card corresponding to the selected button. When the shopper operates the card reader writer 12i to read the card, the CPU 12a receives pieces of data such as the member ID recorded in the card through the card reader writer 12i as an input and records the pieces of data in the RAM 12c (Act 25,Yes). The CPU 12a receives the ID as an input to execute processing, for example, identifying existing member benefits, a payment price discount (such as 5% discount or the like), earning points, or the like.

The CPU 12a transmits a request to the server 13 for the customer information based on the ID read from the card. The server 13 transmits the customer information corresponding to the ID to the payment apparatus 12A1 in response to the request from the payment apparatus 12A1.

When the customer information is received from the server 13 (Act 26), the CPU 12a determines whether the payment method information is defined in the customer information. That is, the CPU 12a determines whether the shopper 4 has identified a payment method in advance for payment processing.

When the customer information is received from the registration apparatus 11A (Act 23, Yes), the CPU 12a determines whether the payment method information is defined in the customer information, without performing processing for reading the card (Act 24 to Act 26).

When the payment method is not defined (Act 27, No), the CPU 12a causes the touch panel 46 to display the payment method selection screen for allowing the shopper to select the payment method (Act 28).

When the operation of the button 73 is detected in the card input screen 60 (Act 25, No), the CPU 12a determines that the shopper 4 selects not to use the card and causes the touch panel 46 to displays the payment method selection screen used for allowing the shopper to select the payment method (Act 28).

FIG. 8 is a diagram illustrating an example of a payment method selection screen 61 in the embodiment. A message 70 (for example "Please select a payment method.") for explaining operation with respect to the operation screen, and buttons 75A, 75B, and 75C for selecting any one of cash, a credit card, electronic money, are displayed in the payment method selection screen 61. The payment method may be a payment method other than the payment methods described above. In the payment method selection screen 61, the total amount display region 72 is provided similar to the card input screen 60. In the payment method selection screen 61, the registration button 76 for instructing to register the payment method is provided.

Here, when operation of the registration button 76 is detected (Act 29, Yes), the CPU 12a determines that the registration of the payment method is instructed by the shopper 4 and proceeds to set a payment method (Act 30). The CPU 12a changes, for example, a display format of the registration button 76 (for example, inversion display or change of a background color into a conspicuous color) to allow the shopper 4 to easily recognize the selected payment method. When the registration button 76 is operated again, the CPU 12a determines that the payment method is un-selected, ends the payment method registration setting processing, and returns the display format of the registration button 76 to the original format of the registration button 76.

When the operation of any one of the buttons 75A to 75C is detected in the payment method selection screen 61 (Act 31, Yes), the CPU 12a determines whether the payment method selection screen 61 is in the payment method registration setting state. When it is determined that the payment method selection screen 61 is in the payment method registration setting state (Act 32, Yes), if the ID is recorded in the RAM 12 (the card is read), the CPU 12a requests the server 13 to register the payment method regarding the shopper 4 (user) indicated by the ID (Act 33). That is, the CPU 12a changes the payment method information of the user indicated by the ID recorded in the server 13 to indicate the payment method designated by the operation of the buttons 75A to 75C.

When the card is not read in any of the registration apparatus 11A and the payment apparatus 12A1, and when the registration of the payment method is instructed by the registration button 76 in the payment method selection screen 61, the CPU 12a may display the operation screen which requests the shopper 4 to cause the card to be read. Here, when reading of the card is executed, the CPU 12a, as described above, changes the payment method information of the user corresponding to the ID read from the card.

Otherwise, when the card is not read, the CPU 12a may not display the registration button 76 in the payment method selection screen 61. That is, the payment method is not able to be registered (changed).

In the payment method selection screen 61, when the shopper 4 operates, for example, the button 75A for instructing to pay cash as the payment method (Act 31, Yes), the CPU 12a causes the touch panel 12g to display the operation screen (payment screen) for payment in accordance with the payment method (the payment method information) (Act 34). That is, the operation screen for prompting the shopper 4 to insert cash is displayed in the touch panel 46.

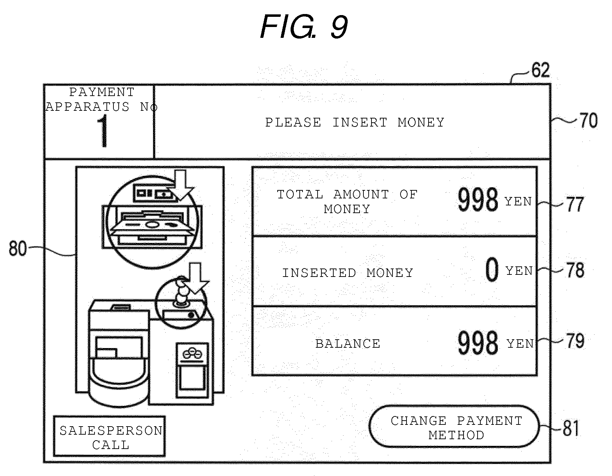

FIG. 9 is a diagram illustrating an example of the payment screen 62 displayed in the touch panel 46 of the payment apparatus 12 in the embodiment. In FIG. 9, since the payment method is cash, the operation screen becomes a screen to prompt the shopper 4 to insert cash. Similarly, when the credit card or the electronic money card is designated as the payment method, the payment screen in accordance with each of the cards is displayed.

The message 70 for explaining the operation and an operation guide 80 for explaining the operation method to the shopper 4 are displayed in the payment screen 62. The total amount of money 77 of the merchandise to be purchased, an inserted amount of money 78 indicating the total amount of money of the paper money and coin inserted into the change dispenser 47 by the operation of the shopper, and a balance 79 indicating a difference between the current total amount of money and the inserted amount of money are also displayed in the payment screen 62. The shopper inserts cash into the change dispenser 47 to update the balance 79. The shopper is able to refer to the balance 79 to recognize an amount of money needed to be inserted. In the payment screen 62, a change button 81 for instructing to change the payment method is provided.

When operation of the change button 81 is detected in the payment screen 62 (Act 35, Yes), the CPU 12a causes the touch panel 46 to display the payment method selection screen 61 illustrated in FIG.8 in order for the shopper to select the payment method and allows the payment method to be selected according to the operation of the shopper 4 in the same manner as described above (Act 28 to Act 31). When an instruction to register the payment method is issued, the CPU 12a registers a newly selected payment method in the server 13 (Act 32 and Act 33).

When the operation in accordance with the screen is performed without performing the operation with respect to the change button 81 in the payment screen 62 (Act 36, No), the CPU 12a displays the next operation screen for causing the payment processing to proceed (Act 37) and receives input operation by the shopper 4.

For example, in a state where the payment screen 62 illustrated in FIG. 9 is displayed, when operation of inserting the paper money and coin, by which the inserted amount of money exceeds the amount of money indicated by total amount of money 77, is performed on the automatic change dispenser 12e, the CPU 12a subsequently displays the payment confirmation screen and receives an instruction to execute the payment processing.

When operation of payment execution by the shopper 4 with respect to the payment confirmation screen is detected (Act 36, Yes), the CPU 12a executes the payment processing according to the operation (Act 38). That is, the CPU 12a settles the total amount of money indicated by the transaction information recorded in the RAM 12c or the auxiliary storage unit 12d by the payment processing.

The CPU 12a controls the printer 12h and issues a receipt including at least a portion of the transaction information recorded in the RAM 12c or the auxiliary storage unit 12d and a result of the payment processing (Act 39). Thus, processing regarding a single transaction is ended. Thereafter, the CPU 12a returns to Act 21 and performs the processing after the Act 21 in the same manner as those described above.

As such, in the payment apparatus 12A1, when the payment method is selected according to the instruction from the shopper 4, the payment method is able to be registered in the server 13 in association with the ID. Accordingly, when the merchandise is purchased next time, when the shopper 4 scans the card in the registration apparatus 11A (Act8), the shopper 4 is able to confirm the payment method on the payment screen 62 of the payment apparatus 12A1. That is, the payment apparatus 12A1 determines that the payment method is set (Act 27, Yes) based on the payment method information from the customer information received from the registration apparatus 11A, and omits processing of Act 24 to Act 26 and Act 28 to Act 33 illustrated in FIG. 5 and FIG. 6. The payment apparatus 12A1 omits displaying of the card input screen 60 illustrated in FIG. 7 and the payment method selection screen 61 illustrated in FIG. 8 and displays the payment screen 62 directly from the standby screen.

Even when the card is not read in the registration apparatus 11A, the payment apparatus 12A1 is able to omit displaying (Act 28 to Act 33) of the payment method selection screen 61 by reading the card in the payment apparatus 12A1 and to cause the payment screen 62 to be displayed at the beginning.

Accordingly, when the shopper 4 use the same payment method each time, the shopper 4 registers the payment method and thus, does not need to select the same payment method each time through the payment method selection screen 61. Thus, it is possible to reduce a workload of operation of the shopper 4 for payment.

Since the change button 81 is provided in the payment screen 62, when the shopper 4 intends to change the payment method, the shopper 4 is able to operate the change button 81 to display the payment method selection screen 61 (Act 35, Yes) and change the payment method. The payment method after the change is able to be registered in the server 13 in the same manner as described above (Act 29 to Act 33). When the merchandise is purchased next time, the payment screen due to the changed payment method can be displayed initially without performing the operation of selecting the payment method.

In the above-mentioned description, although the payment method information is registered with the customer information of the customer (user) in the server 13, the payment method information may be recorded in a rewritable recording medium on which a piece of data such as the card can be rewritten. The payment apparatus 12 reads the ID and the payment method information from the card and displays the operation screen based on the payment method information. That is, when "cash payment" is set as the payment method, displaying of the operation screen in which the payment method illustrated in FIG. 8 is selected is omitted and the operation screen for cash insertion illustrated in FIG. 9 is displayed. When the payment method is changed, the payment method information after the change is recorded in the card. Furthermore, the payment method information may be recorded not in the server 13 but in the registration apparatus 11 or the payment apparatus 12.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope and framework of the inventions.

## Claims

1. A check-out system including at least one registration apparatus and a plurality of payment apparatuses, wherein a check-out process is performed using a registration apparatus and any one of the payment apparatuses,
the registration apparatus including:
a first communication unit;
a first input device configured to receive input of merchandise information for merchandise items to be purchased in a transaction; and
a first controller configured to:
generate payment information indicating a total amount to be paid for the transaction based on the input merchandise information;
control the first communication unit to receive payment method information indicating a payment method corresponding to a customer who performs the transaction; and
control the first communication unit to transmit the payment
information and the payment method information identification; and each of the plurality of payment apparatuses including
a second communication unit; and
a second controller configured to:
control the second communication unit to receive the payment information and the payment method information; and
process payment with respect to the received payment information in accordance with the payment method indicated in the payment method information.

2. The system according to claim 1, wherein the first input device is further configured to:
receive input of a user identification corresponding to the customer that performs the transaction; and
transmit a request for the payment method information, the request including the user identification.

3. The system according to claim 2, further comprising:
a server configured to receive the request, and in response to the request, transmit the payment method information to the first communication unit.

4. The system according to claim 1, further comprising:
a server configured to store customer information, including the payment method information, in association with a user identification.

5. The system according to claim 4, wherein
each of the plurality of payment apparatus includes a second input device configured to receive input of the user identification corresponding to the customer that performs the transaction;
the second controller is configured to control the second communication unit to transmit a request for the customer information, the request including the user identification; and
the server is configured to receive the request, and in response to the request, transmit the customer information to the second communication unit.

6. In a check-out system including at least one registration apparatus and a plurality of payment apparatuses, a method of performing a check-out process using a registration apparatuses and any one of the payment apparatuses, the method comprising the steps of:
receiving, in the registration apparatus, input of merchandise information for merchandise items to be purchased in a transaction;
generating, in the registration apparatus, payment information indicating a total amount to be paid for the transaction based on the input merchandise information;
receiving, in the registration apparatus, payment method information indicating a payment method corresponding to a customer who performs the transaction;
transmitting, from the registration apparatus to a payment apparatus, the payment information and the payment method information;
receiving, in the payment apparatus, the payment information and the payment method information that was transmitted from the registration apparatus; and
processing, in the payment apparatus, payment with respect to the received payment information in accordance with the payment method indicated in the payment method information.

7. The method according to claim 6, further comprising the steps of:
receiving, in the registration apparatus, input of a user identification corresponding to the customer who performs the transaction; and
transmitting a request for the payment method information, the request including the user identification.

8. The method according to claim 6 or 7, further comprising the step of:
receiving the request in a server, and in response to the request, transmitting the payment method information from the server to the registration apparatus.

9. The method according to any one of claims 6 to 8, further comprising the step of:
storing in a server, customer information, including the payment method information, in association with a user identification.

10. The method according to claim 9, further comprising the steps of:
receiving, in the payment apparatus, input of the user identification;
receiving, in the payment apparatus, input of a change to the payment method information; and
transmitting the changed payment method information with the user identification to the server.

11. A payment apparatus for use in a check-out system comprising a registration apparatus, a plurality of the payment apparatuses, and a server, the payment apparatus comprising:
an input device configured to receive input of a user identification corresponding to a customer who performs a transaction;
a communication unit; and
a controller configured to control the communication unit to:
receive, from the registration apparatus, payment information indicating a total amount to be paid for the transaction;
receive, from one of the registration apparatus and the server, payment method information indicating a payment method corresponding to the customer who performs the transaction, based on the user identification; and
process payment with respect to the received payment information in accordance with the payment method indicated in the payment method information.

12. The payment apparatus according to claim 11, wherein the controller further controls the communication unit to transmit a request for the payment method information, the request including the user identification.

13. The payment apparatus according to claim 12, wherein the input device is configured to receive input of a change to the payment method information.

14. The payment apparatus according to claim 13, wherein the controller is configured to process payment with respect to the received payment information in accordance with the payment method indicated in the changed payment method information.

15. The payment apparatus according to claim 13 or 14, wherein the controller is configured to control the communication unit to transmit the changed payment method information with the user identification to the server.
